# EUROPÄISCHE PATENTSCHRIFT

(11) **EP 2 189 644 B1**
(45) Veröffentlichungstag und Bekanntmachung des Hinweises auf die Patenterteilung: **26.10.2011**
(21) Anmeldenummer: 09014205.0
(22) Anmeldetag: 13.11.2009
(51) Int. Cl.: F02F 3/00, F16B 5/02

(54) **Zweiteiliger Kolben für einen Verbrennungsmotor**
Two-part piston for a combustion engine
Piston en deux parties pour un moteur à combustion

(30) Priorität: 20.11.2008 DE 102008058190
(43) Veröffentlichungstag der Anmeldung: 26.05.2010
(73) Patentinhaber: Mahle International GmbH, 70376 Stuttgart (DE)
(72) Erfinder: Issler, Wolfgang, 71409 Schwaikheim (DE)
(74) Vertreter: Pohle, Reinhard

(56) Entgegenhaltungen:
- DE-A1-102005 060 548
- DE-A1-102007 019 931
- DE-U1-202004 009 477
- US-B1- 6 729 291

## Beschreibung

Die Erfindung betrifft einen zweiteiligen Kolben für einen Verbrennungsmotor nach dem Oberbegriff des Anspruches 1.

Aus der Offenlegungsschrift DE 102 57 022 A1 ist ein zweiteiliger, gekühlter Kolben für einen Verbrennungsmotor mit einem Kolbenoberteil und einem Kolbenunterteil bekannt, bei dem die Kolbenteile über einen am Kolbenoberteil angeordneten Gewindebolzen und eine in das Kolbenunterteil eingearbeitete Gewindebohrung zusammengeschraubt werden. Nachteilig ist hierbei, dass im Motorbetrieb auf den Gewindebolzen eine über die Streckgrenze des Gewindebolzenmaterials hinausgehende, axial gerichtete Kraft ausgeübt werden kann, die zu einer bleibenden Längsdehnung des Gewindebolzens und damit zu einer Lockerung der Schraubverbindung zwischen dem Oberteil und dem Unterteil des Kolbens führt.

Diesen Nachteil des Standes der Technik zu vermeiden ist Aufgabe der Erfindung. Gelöst wird die Aufgabe mit dem im Kennzeichen des Hauptanspruches stehenden Merkmal. Zweckmäßige Ausgestaltungen der Erfindung sind Gegenstand der Unteransprüche.

Hierbei wird durch eine plastische Verformung des Gewindebolzens in axialer Richtung erreicht, dass die Streckgrenze des Gewindebolzenmaterials so weit erhöht wird, dass bei der im Motorbetrieb üblichen Zugbeanspruchung der Gewindebolzen keine Gefahr der Plastifizierung des Gewindebolzenmaterials und damit der Lockerung der Schraubverbindung zwischen Kolbenoberteil und Kolbenunterteil besteht.

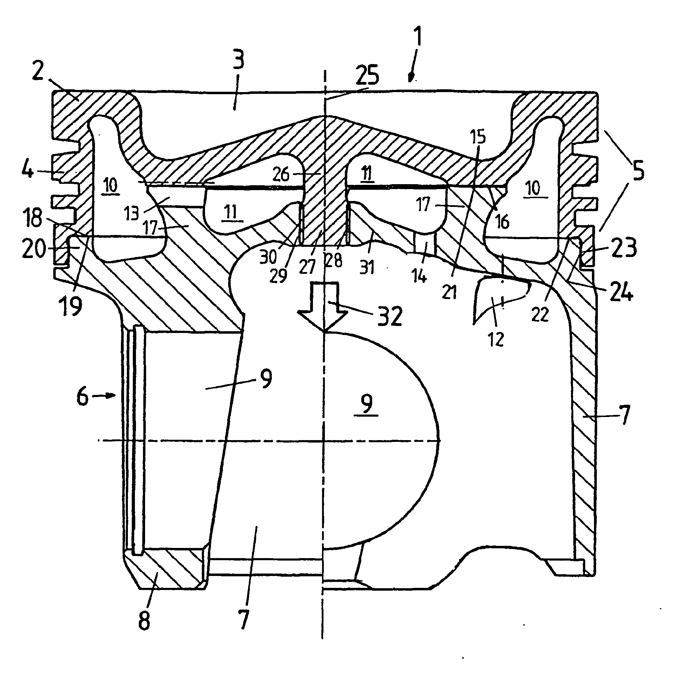

Ein Ausführungsbeispiel der Erfindung wird im Folgenden anhand der Zeichnung beschrieben. Sie zeigt ein Schnittbild eines Kolbens, dessen linke Hälfte einen Halbschnitt des Kolbens in Bolzenrichtung und dessen rechte Hälfte einen Halbschnitt des Kolbens in Druck-Gegendruck-Richtung darstellt.

In der Figur ist ein zweiteiliger gekühlter Kolben 1 dargestellt, der aus einem Kolbenoberteil 2, das eine Verbrennungsmulde 3 und eine Ringwand 4 mit einer Ringpartie 5 aufweist, und aus einem Kolbenunterteil 6 besteht, das einen kastenförmigen Kolbenschaft 7 und zwei damit verbundene Bolzennaben 8 mit je einer Bolzenbohrung 9 zur Aufnahme eines in der Figur nicht dargestellten Kolbenbolzens umfasst. Das Kolbenoberteil 2 und das Kolbenunterteil 6 begrenzen einen äußeren ringförmigen Kühlkanal 10 und einen konzentrisch dazu angeordneten, inneren Kühlkanal 11, wobei der äußere Kühlkanal 10 mindestens eine Zuflussöffnung 12 zum Einleiten von Kühlöl aufweist und über mindestens einen Überlaufkanal 13 mit dem inneren Kühlkanal 11 verbunden ist. Dieser Überlaufkanal 13 kann als Bohrung ausgebildet sein. Beispielsweise können hierbei zwei einander gegenüberliegende Überlaufkanäle 13 vorgesehen sein. Der innere Kühlkanal 11 weist mindestens eine Ablaufbohrung 14 auf, über die das Kühlöl aus dem inneren Kühlkanal 11 austreten kann.

Das Kolbenoberteil 2 ist hierbei zum einen über eine ringförmige Auflagefläche 15, die auf der der Verbrennungsmulde 3 abgewandten Seite des Kolbenoberteiles 2 angeordnet ist, auf einer oberen Auflagefläche 16 einer ringförmigen Tragrippe 17 des Kolbenunterteils 6 und zum anderen über eine sich auf der Unterseite der Ringwand 4 befindende Querschnittsfläche 18 auf einer oberen Querschnittsfläche 19 eines ringförmigen Tragsteges 20 des Kolbenunterteiles 6 gelagert. Hierbei bilden die Auflageflächen 15 und 16 eine innere, ebene und horizontal angeordnete, bzw. dach- oder tellerförmig ausgebildete Auflage 21 und die Querschnittsflächen 18 und 19 eine zur inneren Auflage 21 koaxial und horizontal angeordnete, bzw. ebenfalls dach- oder tellerförmig ausgebildete, äußere Auflage 22.

Der Tragsteg 20 ist stufenförmig ausgebildet, sodass das Kolbenoberteil 2 über eine in die Innenseite des unteren Teiles der Ringwand 4 eingearbeitete, zylinderförmige Ausnehmung 23 dadurch zentriert werden kann, dass beim Zusammenbau von Kolbenober- und -unterteil die Innenwand der zylinderförmigen Ausnehmung 23 mit der zylinderförmigen Stirnseite 24 des Tragsteges 20 in Kontakt kommt, wobei erforderlich ist, dass der Innendurchmesser der zylinderförmigen Ausnehmung 23 um ein solches Toleranzmaß größer ist als der Außendurchmesser der zylinderförmigen Stirnseite 24 des Tragsteges 20, dass eine problemlose Montage des Oberteils 2 auf das Unterteil 6 gewährleistet ist.

Auf der der Verbrennungsmulde 3 abgewandten Seite weist das Kolbenoberteil 2 einen mittig und koaxial zur Längsachse 25 des Kolbens 1 angeordneten Bolzen 26 auf, dessen Ende 27 mit einem Gewinde 28 versehen ist. Der Bereich 31 zwischen der ringförmigen Tragrippe 17 des Kolbenunterteils 6, der gemeinsam mit dem Kolbenoberteil 2 den inneren Kühlkanal 11 begrenzt, ist relativ dünnwandig ausgebildet und ist in seiner Mitte mit einer koaxial zur Längsachse 25 des Kolbens 1 angeordneten Bohrung 29 versehen, die ein auf das Gewinde 28 des Bolzens 26 passendes Innengewinde 30 aufweist.

Dies ermöglicht, dass bei der Montage des Kolbens 1 lediglich der Gewindebolzen 26 des Kolbenoberteils 2 in die Gewindebohrung 29 des Bereiches 31 eingeschraubt werden muss. Hierbei bewirkt die Elastizität des relativ dünnwandigen Bereiches 31, dass dieser sich beim Zusammenschrauben von Kolbenober- und -unterteil wie eine Tellerfeder verformt und sich das innere, mit der Gewindebohrung 29 versehene Zentrum des Bereiches 31 in Richtung Kolbenoberteil 2 aufwölbt. Zusätzlich verlängert sich bei der Montage der gewindelose Dehnschaft des Gewindebolzens 26, wodurch eine weitere Verbesserung der Sicherheit des Sitzes des Kolbenoberteiles 2 auf dem Kolbenunterteil 6 erreicht wird. Hierbei werden sowohl die Auflageflächen 15 und 16 der inneren Auflage 21 als auch die Querschnittsflächen 18 und 19 der äußeren Auflage 22 aufeinandergepresst, wodurch der innere und der äußere Kühlkanal 10 und 11 abgedichtet werden. Die Festigkeit der Montage von Kolbenober- und -unterteil wird damit so weit vergrößert, dass eine zusätzliche Mutter, bzw. Kontermutter zum Erreichen einer dauerhaften Montageverbindung nicht erforderlich ist. Versuche haben gezeigt, dass unter allen denkbaren Betriebsbedingungen eine ausreichende Vorspannung der beiden Teile des Kolbens gewährleistet ist.

Das Kolbenoberteil 2 besteht aus einem oxidationsbeständigen und warmfesten Werkstoff. Das Kolbenunterteil 6 besteht aus einem ausscheidungshärtenden ferritisch-perlitischen Vergütungsstahl.

Im Motorbetrieb besteht hierbei die Gefahr, dass insbesondere beim Ansaugtakt auf den Bolzen 26 eine über die Streckgrenze des Bolzenmaterials hinausgehende Kraft in Richtung des Pfeils 32 ausgeübt wird, die zu einer bleibenden Längsdehnung dieses Materials und damit zu einer Lockerung der Schraubverbindung zwischen Kolbenoberteil 2 und Kolbenunterteil 6 des Kolbens 1 führt. Deshalb wird gemäß der Erfindung vorgeschlagen, die Streckgrenze des Bolzenmaterials dadurch zu erhöhen, dass der Bolzen im kalten Zustand einer kontrollierten Zugbeanspruchung unterzogen wird, wodurch er eine bleibende Dehnung in axialer Richtung von näherungsweise 1 % seiner Länge erfährt, ohne dass die Duktilität des Bolzenmaterials dabei beeinträchtigt wird.

### Bezugszeichenliste

- 1: Kolben
- 2: Kolbenoberteil
- 3: Verbrennungsmulde
- 4: Ringwand
- 5: Ringpartie
- 6: Kolbenunterteil
- 7: Kolbenschaft
- 8: Bolzennabe
- 9: Bolzenbohrung
- 10: äußerer Kühlkanal
- 11: innerer Kühlkanal
- 12: Zuflussöffnung
- 13: Überlaufkanal, Bohrung
- 14: Ablaufbohrung
- 15: Auflagefläche des Kolbenoberteils 2
- 16: Auflagefläche des Kolbenunterteils 6
- 17: Tragrippe
- 18: Querschnittsfläche des Kolbenoberteils 2
- 19: Querschnittsfläche des Kolbenunterteils 6
- 20: Tragsteg
- 21: innere Auflage
- 22: äußere Auflage
- 23: Ausnehmung der Ringwand 4
- 24: Stirnseite des Tragsteges 20
- 25: Längsachse des Kolbens 1
- 26: Bolzen, Gewindebolzen
- 27: Ende des Bolzens 26
- 28: Gewinde
- 29: Bohrung, Gewindebohrung
- 30: Innengewinde der Bohrung 29
- 31: Bereich zwischen der Tragrippe 17
- 32: Pfeil

## Patentansprüche

1. Zweiteiliger, gekühlter Kolben (1) für einen Verbrennungsmotor bestehend aus einem Kolbenoberteil (2) mit einer Ringwand (4) und einer Ringpartie (5) und aus einem Kolbenunterteil (6), das mit dem Kolbenoberteil (2) einen äußeren, ringförmigen (10) und zudem einen konzentrisch dazu angeordneten, inneren ringförmigen Kühlkanal (11) bildet, und das einen kastenförmigen Kolbenschaft (7) mit zwei damit verbundene Bolzennaben (8) umfasst, wobei das Kolbenoberteil (2) auf der dem Kolbenunterteil (6) zugewandten Seite einen koaxial zur Längsachse (25) des Kolbens (1) angeordneten Gewindebolzen (26) und das Kolbenunterteil (6) auf der dem Kolbenoberteil (2) zugewandten Seite eine koaxial zur Kolbenlängsachse (25) angeordnete Gewindebohrung (29) mit einem auf das Gewinde (28) des Gewindebolzens (26) passenden Innengewinde (30) aufweist, und wobei der Gewindebolzen (26) und die Gewindebohrung (29) derart angeordnet sind, dass zur Montage des Kolbenoberteils (2) mit dem Kolbenunterteil (6) der Gewindebolzen (26) in die Gewindebohrung (29) einschraubbar ist,
**dadurch gekennzeichnet,**
**dass** das Material, aus dem der Gewindebolzen (26) besteht, **dadurch** eine im Vergleich zum restlichen Kolbenmaterial höhere Streckgrenze aufweist, dass der Gewindebolzen (26) ausgehend vom fertig hergestellten Kolbenoberteil (6) um näherungsweise 1 % seiner Länge in axialer Richtung plastisch verformt ist.

2. Kolben (1) nach Anspruch 1, **dadurch gekennzeichnet, dass** zur Erhöhung der Streckgrenze der Gewindebolzen (26) ausgehend vom fertig hergestellten Kolbenunterteil (6) in axialer Richtung gedehnt ist.

## Claims

1. A two-part cooled piston (1) for an internal combustion engine comprising an upper piston part (2) having a ring wall (4) and a ring belt (5) and comprising a lower piston part (6) forming an outer, ring-shaped cooling channel (10) and an inner, ring-shaped cooling channel (11) arranged concentric to said upper piston part (2), with a box-shaped piston skirt (7) having two pin bosses (8) connected thereto, wherein a threaded pin (26) is disposed coaxially to the longitudinal axis (25) of the piston (1) on a side of the upper piston part (2) facing said lower piston part (6) and a threaded bore (29) is disposed coaxially to the longitudinal axis (25) on a side of the lower piston part (6) facing said upper piston part (2), said bore having an inner thread (30) which matches the thread (28) of the threaded pin (26), and wherein the threaded pin (26) and the threaded bore (29) are arranged such that the threaded pin (26) can be screwed into the threaded bore (29) in order to assemble the upper piston part (2) to the lower piston part (6),
**characterised in that**
the material comprising the threaded pin (26) has a stretching limit which is higher in comparison to the rest of the piston material such that the threaded pin (26) is plastically deformed in the axial direction by approximately 1% of its length starting from the finished upper piston part (6).

2. The piston (1) according to claim 1, **characterised in that** the threaded pin (26) is stretched in the axial direction starting from the finished lower piston part (6) so as to increase the stretching limit.

## Revendications

1. Piston refroidi (1) de deux pièces pour un moteur à combustion constitué d'une partie supérieure de piston (2) avec une paroi annulaire (4) et une partie annulaire (5) et d'une partie inférieure de piston (6) qui forme avec la partie supérieure de piston (2) un canal de refroidissement annulaire extérieur (10) et un canal de refroidissement annulaire intérieur (11) agencé de manière concentrique par rapport au dernier, et qui comprend une jupe de piston en forme de caisson (7) à laquelle sont reliés deux moyeux à goupille (8), la partie supérieure de piston (2) présentant sur le côté dirigé vers la partie inférieure de piston (6) un goujon fileté (26) aligné de manière coaxiale à l'axe longitudinal (25) du piston (1) et la partie inférieure de piston (6) présentant sur le côté tourné vers la partie supérieure de piston (2) un trou taraudé (29) aligné de manière coaxiale à l'axe longitudinal du piston (25) avec un taraudage (30) adapté au filetage (28) du goujon fileté (26) ; le goujon fileté (26) et le trou taraudé (29) étant agencés de manière à ce que le goujon fileté (26) puisse être vissé dans le trou taraudé (29) lors du montage de la partie supérieure de piston (2) avec la partie inférieure de piston (6),
**caractérisé en ce que**
le matériau dans lequel est fait le goujon fileté (26) présente une limite d'élasticité plus élevée que les autres matériaux du piston, et le goujon fileté (26) est déformé de façon plastique dans le sens axial sur environ 1 % de sa longueur à partir de la partie supérieure de piston (6) achevée.

2. Piston (1) selon la revendication 1, **caractérisé en ce que** le goujon fileté (26) est étiré dans le sens axial à partir de la partie supérieure de piston (6) achevée pour augmenter la limite d'élasticité.
